# EUROPÄISCHE PATENTSCHRIFT

(11) **EP 1 658 769 B1**
(45) Veröffentlichungstag und Bekanntmachung des Hinweises auf die Patenterteilung: **14.11.2007**
(21) Anmeldenummer: 05024892.1
(22) Anmeldetag: 15.11.2005
(51) Int. Cl.: A01G 9/02

(54) **Pflanztopf**
Plant pot
Pot pour la culture de plantes

(30) Priorität: 19.11.2004 DE 202004018053 U
(43) Veröffentlichungstag der Anmeldung: 24.05.2006
(73) Patentinhaber: Pöppelmann Holding GmbH & Co. KG., 49393 Lohne (DE)
(72) Erfinder: Sieverding, Alfons, 49393 Lohne (DE)
(74) Vertreter: Bünemann, Egon

(56) Entgegenhaltungen:
- DE-U1- 9 308 335
- DE-U1- 20 109 317
- DE-U1- 20 206 329
- DE-U1-9202004 005 74
- NL-C2- 1 023 159

## Beschreibung

Die Erfindung betrifft einen Pflanztopf nach dem Anspruch 1. Pflanztöpfe dieser Art sind auf die besonderen Anforderungen an Aufzuchtbedingungen der Pflanzen und an die Handhabung ausgerichtet, wobei ein Topfboden mit geeigneten und ausreichenden Öffnungen auf die Belüftung und Entwässerung des Topfes, ggf. auch auf die Bewässerung des Topfes von unten in einer "Ebbe und Flut"-Bewässerung ausgerichtet ist. Ein randnah umlaufender Randsteg definiert eine stabile Aufstellung des Pflanztopfs auf Arbeitstischen u. dgl. und distanziert den Topfboden von der Aufstellebene, so daß die Öffnungen zur Entwässserung und Belüftung frei liegen. Für den freien Belüftungs- und Entwässerungszugang zu den Öffnungen ist aber auch zumindest ein Durchlaß im Randsteg vorzusehen. Vorzugsweise werden mehrere Durchlässe als Unterbrechungen des Randstegs symmetrisch verteilt vorgesehen, vgl. Dokument DE-U-20 2004 005749.

Diese Durchlässe rufen herkömmlich allerdings auch Probleme hervor, wenn mit den Endbereichen und Lücken des Randstegs bzw. der Randstege Bereiche vorliegen, die zum Verhaken neigen. So können die Endbereiche der Randstege mit eckiger Kontur und ggf. auch noch mit formgebungsbedingten Graten an Hände oder Handschuhe angreifen oder sich auf profilierten Unterlagen, insbesondere auf Gitterböden oder Gitterauflagen verhaken. Besonders nachteilig sind derartige Effekte gegenüber sog. Pflanzentüten; etwa nach oben sich kegelstumpfartig ausweitenden Kunststoffhüllen, in die die Pflanztöpfe mit Pflanzen für den Versand eingesteckt werden und die die Pflanze seitlich abdecken und schützen. Verhakungen des Pflanzenbodens beim Einstecken behindern nicht nur die Arbeit, sondern führen auch zum Aufreißen der Pflanzentüten.

Aufgabe der Erfindung ist es, einen Pflanztopf der hier betrachteten Art unter Beibehaltung der herkömmlichen Vorteile einschl. der preisgünstigen Herstellungsmöglichkeiten so auszugestalten, daß die im Bereich der Randstege und der Durchlässe auftretenden Nachteile vermieden werden.

Gemäß der Erfindung wird diese Aufgabe von einem Pflanztopf nach dem Oberbegriff des Anspruchs 1 ausgehend mit den kennzeichnenden Merkmalen des Anspruchs 1 gelöst. Mit der erfindungsgemäßen Lösung wird ein scharfer Abbruch der Kontur des Randstegs vermieden. Grundsätzlich kann die Höhe des Randstegs auch in den nach innen abbiegenden Endbereichen weitergeführt werden, jedoch wird im allgemeinen mit Vorteil vorgesehen, daß die abbiegenden Randstege zum Topfboden hin in der Höhe auslaufen.

In jedem Fall erhält der Randsteg eine weiche, abgerundete Kontur, die bei der Handhabung sicherer, angenehmer und praktischer ist, da sie Verhakungen vermeidet und die auch beim Einstecken eines Pflanztopfes in Pflanztüten jede Gleithemmung und vor allem jedes Einreißen der Pflanztüten ausräumt. Der so gestaltete Pflanztopf kann auch auf seinem Randsteg über profilierte Auflageflächen einschl. Gitterböden u. dgl. verschoben werden, um den Arbeitsablauf von Hand wie auch maschinelle Arbeits- und Transportvorgänge zu erleichtern, ohne daß Verhakungen entstehen, die die Bewegung verhindern und die Töpfe in Kippgefahr bringen.

Vorteilhaft kann vor einem solchen Durchlaß und mit einem Abstand zu diesem ein Lückensteg angeordnet sein, der in der Höhe dem Randsteg entspricht und mit einem Abstand zum Randsteg den Durchlaß freihält, der aber von der Seite betrachtet eine durchgängige untere Kontur des Topfes über den Durchlaß hinweg gewährleistet. Ein solcher Lückensteg stabilisiert den Topfboden in einem Bereich, in dem der Randsteg unterbrochen ist. Insbesondere aber verhindert er ein Eingreifen von Stäben oder Profilrillen in den Durchlaß, wenn der Topf auf einer profilierten Unterlage steht. Insoweit bewirkt der Lückensteg einen für die Aufstellung und Verschiebbarkeit des Topfes wichtigen Lückenschluß.

Randstege, Lückenstege und auch etwaige sonstige Bodenstege können vorteilhaft auch mit zum Boden hin schräg oder abgerundet auslaufenden Endbereichen versehen sein, um auch in dieser Hinsicht Ecken und Kanten zu vermeiden, die zum Verhaken neigen. Insbesondere auch im Hinblick auf eine materialsparende Ausführung mit dünnen Rand- oder Lückenstegen können diese zur Abstützung mit Querstegen verbunden sein, die zum Boden hin auslaufen, und zwar zweckmäßig so, daß sie am Rand einer Öffnung im Boden enden. Dies hat den zusätzlichen Vorteil, daß Wassertropfen, die sich sonst adhäsiv am Rand einer Bodenöffnung festsetzen und dort hängenbleiben würden, über derartig schräg ansetzende Kanten nach unten abgeleitet werden. Dies fördert die weitergehende Entwässerung des Topfes.

Ein Ausführungsbeispiel der Erfindung ist in der Zeichnung dargestellt und wird nachfolgend näher beschrieben. In der Zeichnung zeigen:
- Fig. 1: Ansicht des Pflanztopfs schräg von unten,
- Fig. 2: Ansicht des Pflanztopfs nach Fig. 1, ebenfalls schräg von unten aber in flacherem Betrachtungswinkel und
- Fig. 3: Unteransicht des Pflanztopfs.

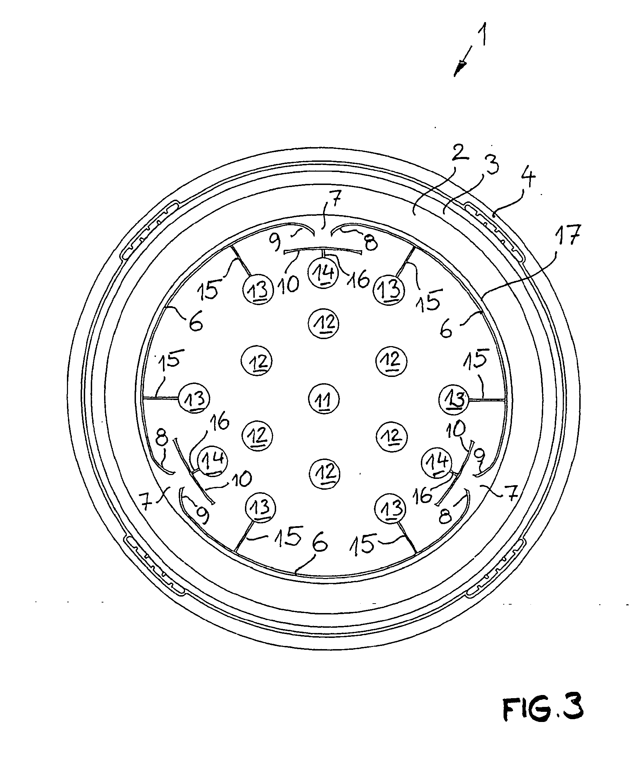

Der in der Zeichnung in drei Unter-Ansichten dargestellte, insgesamt mit 1 bezeichnete Pflanztopf aus dünnwandigem Kunststoff weist einen stumpfkegeligen Mantel 2 aus, der nach oben hin über einen Stapelsims 3 hinweg in einen auskragenden Topfrand 4 mündet und unterseitig größtenteils durch einen Topfboden 5 abgeschlossen ist. Der Topfboden 5 ist längs seines Umfangsrandes durch drei in Umfangsrichtung aufeinanderfolgende Randstege 6 abgestützt und hochgestellt, die sich zu einer fortlaufenden Randabstützung ergänzen und nur jeweils in drei Durchlässen 7 unterbrochen sind. Die Randstege 6 sind ineinander an jedem der Durchlässe 7 gegenüberliegenden Endbereichen 8,9 nach innen abbiegend geformt, wie sich insbesondere aus der Unteransicht gemäß Fig. 3 erkennen läßt.

Vor jedem Durchlaß 7 ist innenseitig ein Lückensteg 10 etwa parallel zur Randkontur des Topfbodens 5 verlaufend angeordnet und von den Endbereichen 8,9 der Randstege so weit nach innen versetzt, daß sich der Durchlaß 7 zu beiden Enden des Lückenstegs 10 hin unter dem Topfboden 5 fortsetzen kann.

Der Topfboden ist mit verteilten Öffnungen zu Entwässerung und Belüftung ausgestattet, die der mit den Randstegen 6 und den Lückenstegen 10 dreigeteilten Symmetrie entsprechend verteilt sind. So ist eine mittlere Öffnung 11 von einem inneren Kranz von sechs Öffnungen 12 umgeben, um die herum ein äußerer Kranz von neun Öffnungen 13 bzw. 14 angeordnet ist, wobei die drei Öffnungen 14 jeweils radial auf die Durchlässe 7 ausgerichtet sind und die Öffnungen 13 radial weiter außen und auf Lücke zu den Öffnungen 12 liegen.

Die Randstege 6 sind jeweils mit zwei Querstegen 15 verbunden, die zum einen als Abstützung der Aussteifung der Randstege auf der Innenseite dienen, zum anderen aber jeweils zu einer der Öffnungen 13 führen, indem sie zum Rand der Öffnungen 13 hin schräg auslaufen. Somit dienen die Querstege 15 auch zur Ableitung von Wassertropfen vom Rand der Öffnungen 13 nach unten, die sonst leicht hängenbleiben würden.

Ganz entsprechend sind die Lückenstege 10 mit Querstegen 16 abgestützt, die gleichzeitig der Ableitung von Wassertropfen vom Bereich der Öffnungen 14 nach unten dienen, da sie zu deren Rand hin schräg auslaufen.

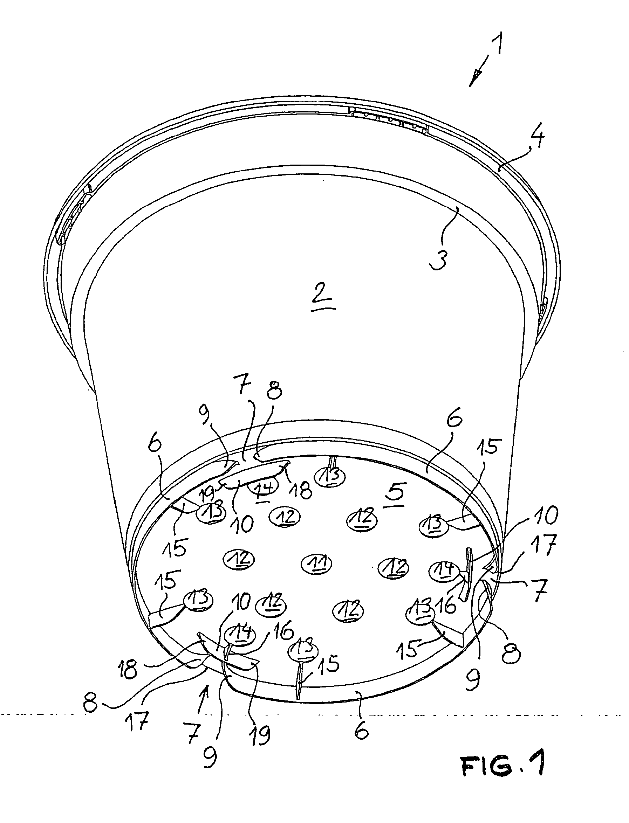

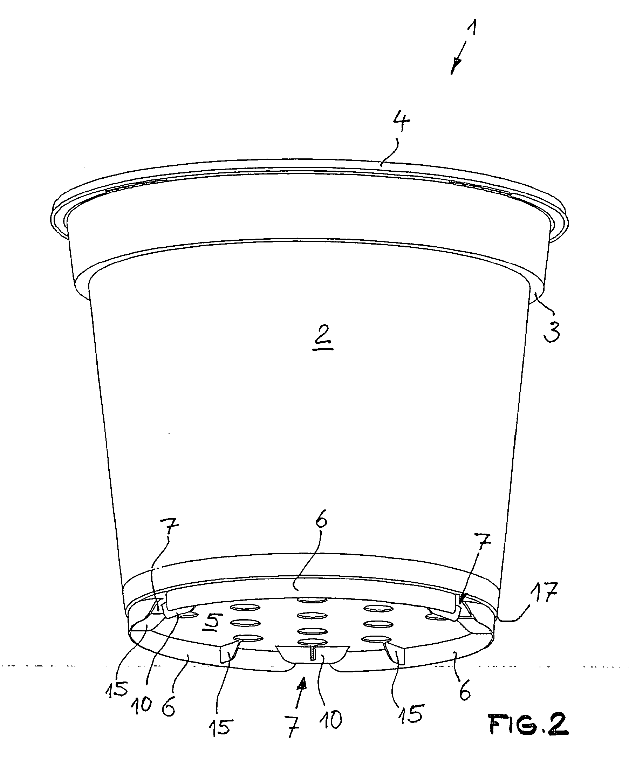

Wie aus den Fig. 1 und 2 in räumlicher Perspektive näher zu ersehen ist, wenden sich die Randstege 6 in ihren Endbereichen 8,9 nicht nur von einem Rand 17 des Topfbodens unter Abbiegung nach innen, sondern laufen auch zum Topfboden 5 hin aus, wobei dieser Verlauf mit Abschrägung und Abrundung ohne Ecken und Kanten gestaltet ist.

All dieses führt dazu, daß die bei herkömmlichen Pflanztöpfen problematischen Durchlaßbereiche nunmehr keine Handhabungsschwierigkeiten schaffen. Der gerundete Verlauf der Randstege, in den Endbereichen 8,9 zum Topfinneren geführt und nach oben auslaufend, nimmt dem Bereich Verletzungsgefahren und Hemmnisse, die sowohl bei der Handarbeit wie auch bei der maschinellen Bearbeitung zu beobachten waren.

Auch ein Aufnehmen und insbesondere auch ein Verschieben solcher Töpfe auf unebenen, profilierten oder mit Gittern versehenen Aufstellflächen ist durch die jeweiligen Abrundungen der Endbereiche problemlos möglich. Die Lückenstege 10 schließen dabei die Aufstellkontur in horizontaier Betrachtung und verhindern insbesondere, daß Profilrippen oder Gitterstäbe in die Durchlässe 7 eingreifen und die Bewegung der Töpfe auf Aufstellflächen behindern. Auch die Lückenstege weisen angeschrägte bzw. abgerundete Enden (18,19) für ein verhakungsfreies Handhaben auf.

In einer besonders wichtigen Ausgestaltung ist der Pflanztopf als sog. "Grünpflanzencontainer" mit Substrat und einer Grünpflanze versehen, in eine stumpfkegelig nach unten zulaufende und unten offene "Pflanztüte" gesteckt, die die Pflanze in dem Topf zusammenhält und schützt. Die Pflanztüte liegt dann mit dem unteren Bereich ihrer Kegelstumpfform am Pflanztopf bzw. Topfmantel an und steht nach oben über Pflanztüten in Form dünnwandiger Kunststoff-Klarsichtfolien, die verletzungsempfindlich sind und an scharfen Ecken oder Kanten hängen bleiben, lassen sich mit dem erfindungsgemäßen Pflanztopf schnell, sicher und einfach zusammenstecken, ohne daß der Topfboden festhakt oder die Pflanztüte einreißt.

## Patentansprüche

1. Pflanztopf (1), insbesondere Kunststoff-Pflanztopf, mit einem mit Öffnungen (11,12,13,14) zur Bewässerung und/oder Belüftung versehenen Topfboden (5) mit zumindest einem Bodensteg (6,10,15,16) zur Beabstandung des Topfbodens gegenüber einer Aufstellfläche und zur unterseitigen Freilegung der Öffnungen (11,12,13,14), der als randnah verlaufender Randsteg (6) zumindest einen seitlichen Durchlaß (7) für Wasser oder Luft offenläßt, **dadurch gekennzeichnet, daß** der Durchlaß (7) zwischen zwei vom Rand (17) des Topfbodens (5) nach innen abbiegenden Endbereichen (8,9) des Randstegs (6) verläuft.

2. Pflanztopf (1) nach Anspruch 1, **dadurch gekennzeichnet, daß** die abbiegenden Endbereiche (8,9) des Randstegs (6) zum Topfboden (5) hin in der Höhe auslaufen.

3. Pflanztopf (1) nach einem der Ansprüche 1 oder 2, **dadurch gekennzeichnet, daß** der Topfboden (5) mit in Umfangsrichtung zumindest drei jeweils mit zwischenliegendem Durchlaß (7) aufeinanderfolgenden Randstegen (6) versehen ist.

4. Pflanztopf (1) nach einem der Ansprüche 1 bis 3, **dadurch gekennzeichnet, daß** innenseitig quer vor dem Durchlaß (7) und mit einem Abstand zu diesem ein Lückensteg (10) angeordnet ist.

5. Pflanztopf (1) nach Anspruch 4, **dadurch gekennzeichnet, daß** der Lückensteg (10) mit zum Topfboden (5) auslaufenden Endbereichen (18,19) versehen ist.

6. Pflanztopf (1) nach einem der Ansprüche 1 bis 3, **dadurch gekennzeichnet, daß** die Randstege (6) mit zumindest einem nach innen jeweils zu einer innenseitig benachbarten Öffnung (13) hin auslaufenden und am Rand der Öffnung (13) endenden Quersteg (15) verbunden sind.

7. Pflanztopf (1) nach Anspruch 4 oder 5, **dadurch gekennzeichnet, daß** die Lückenstege (10) mit zumindest einem zu einer benachbarten Öffnung (14) hin auslaufenden und am Rand der Öffnung (14) endenden Quersteg (16) verbunden sind.

8. Pflanztopf (1) nach einem der Ansprüche 1 bis 7, **gekennzeichnet durch** eine im wesentlichen kegelstumpfförmige, am Pflanztopf (1) mantelseitig anliegende und nach oben überstehende Pflanztüte.

## Claims

1. Plant pot (1), in particular a plant pot of plastics material, having a floor (5) which is provided with openings (11, 12, 13, 14) for water supply and/or ventilation and which has at least one floor ridge (6, 10, 15, 16) to space the floor of the pot away from a supporting surface and to allow the openings (11, 12, 13, 14) to be exposed at the underside, which floor ridge (6, 10, 15, 16), in the form of an edge-ridge (6) extending close to the edge, leaves open at least one lateral through-passage (7) for water or air, **characterised in that** the through-passage (7) extends between two end regions (8, 9) of the edge-ridge (6) which curve inwards away from the edge (17) of the floor (5) of the pot.

2. Plant pot (1) according to claim 1, **characterised in that** the end regions (8, 9) of the edge-ridge (6) which curve away taper in height towards the floor (5) of the pot.

3. Plant pot (1) according to either of claims 1 and 2, **characterised in that** the floor (5) of the pot is provided in the circumferential direction with at least three edge-ridges (6) which succeed one another, with an intervening through-passage (7) at each point of succession.

4. Plant pot (1) according to one of claims 1 to 3, **characterised in that** a gap-covering ridge (10) is arranged on the inner side transversely in front of the through-passage (7) and at a distance therefrom.

5. Plant pot (1) according to claim 4, **characterised in that** the gap-covering ridge (10) is provided with end regions (18, 19) which taper towards the floor (5) of the pot.

6. Plant pot (1) according to one of claims 1 to 3, **characterised in that** the edge-ridges (6) are connected to at least one transverse ridge (15), which transverse ridges each taper inwards towards an opening (13) adjacent thereto on the inner side and each end at the edge of the opening (13).

7. Plant pot (1) according to claim 4 or 5, **characterised in that** the gap-covering ridges (10) are connected to at least one transverse ridge (16) which tapers towards an adjacent opening (14) and which ends at the edge of the opening (14).

8. Plant pot (1) according to one of claims 1 to 7, **characterised by** a substantially frusto-conical plant bag which rests against the plant pot (1) on the wall side thereof and which projects upwards.

## Revendications

1. Pot pour la culture de plantes (1), en particulier un pot en matière synthétique, comprenant un fond (5) doté d'ouvertures (11, 12, 13, 14) prévues pour l'arrosage et/ou l'aération et présentant au moins un support de fond (6, 10, 15, 16) permettant de tenir le fond du pot à distance d'une surface de pose et de dégager les ouvertures (11, 12, 13, 14) situées sous le pot, et ménageant sur le côté au moins un passage (7) pour l'eau ou l'air le long du support extérieur (6) s'étendant à proximité du bord, **caractérisé en ce que** le passage (7) s'étend entre deux zones d'extrémité (8, 9) du support de bord (6) courbées depuis le bord (17) du fond du pot (5) vers l'intérieur.

2. Pot pour la culture de plantes (1) selon la revendication 1, **caractérisé en ce que** les zones d'extrémité (8, 9) du support extérieur (6) courbées vers l'intérieur s'étendent vers le fond du pot dans le sens de la hauteur.

3. Pot pour la culture de plantes (1) selon la revendication 1 ou 2, **caractérisé en ce que** le fond du pot (5) est pourvu, dans le sens de la périphérie, d'au moins trois supports de bord (6) consécutifs et entre lesquels est chaque fois intercalé un passage (7).

4. Pot pour la culture de plantes (1) selon l'une quelconque des revendications 1 à 3, **caractérisé en ce qu'**un support (10) formant un vide est agencé transversalement à l'intérieur devant le passage (7) et à distance de celui-ci.

5. Pot pour la culture de plantes (1) selon la revendication 4, **caractérisé en ce que** le support (10) formant un vide est pourvu de zones d'extrémité (18,19) s'étendant vers le fond du pot (5).

6. Pot pour la culture de plantes (1) selon l'une quelconque des revendications 1 à 3, **caractérisé en ce que** les supports de bord (6) sont à chaque fois reliés à au moins un support transversal (15) s'étendant vers l'intérieur vers une ouverture (13) intérieure voisine et se terminant sur le bord de l'ouverture (13).

7. Pot pour la culture de plantes (1) selon la revendication 4 ou 5, **caractérisé en ce que** les supports (10) formant un vide sont reliés à au moins un support transversal (16) s'étendant vers une ouverture (14) voisine et se terminant sur le bord de l'ouverture (14).

8. Pot pour la culture de plantes (1) selon l'une quelconque des revendications 1 à 7, **caractérisé par** un sachet pour plantes essentiellement de forme tronconique, adjacent à la surface latérale du pot pour la culture de plantes (1) et saillant vers le haut.
